# EUROPÄISCHE PATENTSCHRIFT

(11) **EP 3 588 464 B1**
(45) Veröffentlichungstag und Bekanntmachung des Hinweises auf die Patenterteilung: **16.04.2025**
(21) Anmeldenummer: 19178568.2
(22) Anmeldetag: 05.06.2019
(51) Int. Cl.: G08G 1/01, G08G 1/0962, G06V 20/56, G06V 20/58

(54) **ZUORDNUNG VON AMPEL ZU ZUGEHÖRIGEN FAHRSTREIFEN**
ALLOCATION OF TRAFFIC LIGHT TO ASSOCIATED LANES
ALLOCATION DE FEUX DE CIRCULATION À DES VOIES DE CIRCULATION ASSOCIÉES

(30) Priorität: 21.06.2018 DE 102018210125
(43) Veröffentlichungstag der Anmeldung: 01.01.2020
(73) Patentinhaber: Volkswagen AG, 38440 Wolfsburg (DE)
(72) Erfinder: Max, Stephan, 38518 Gifhorn (DE); Günzel, Thorben, 38118 Braunschweig (DE); Klomp, Sven, 31311 Uetze / Dollbergen (DE)

(56) Entgegenhaltungen:
- US-A1- 2014 185 880
- US-A1- 2016 282 879
- US-A1- 2017 186 314
- CHRISTIAN RUHHAMMER ET AL: "Automated Intersection Mapping From Crowd Trajectory Data", IEEE TRANSACTIONS ON INTELLIGENT TRANSPORTATION SYSTEMS, vol. 18, no. 3, 1 March 2017 (2017-03-01), Piscataway, NJ, USA, pages 666 - 677, XP055481047, ISSN: 1524-9050, DOI: 10.1109/TITS.2016.2585518

## Beschreibung

Die Erfindung betrifft ein Verfahren zur Zuordnung von Ampeln zu den zugehörigen Fahrstreifen einer Fahrbahn sowie eine Verwendung des Verfahrens in einem Fahrzeug.

Beim autonomen beziehungsweise automatischen Fahren eines Kraftfahrzeugs muss dieses an Kreuzungen mit komplexen Ampelsituationen zurechtkommen. Dazu ist eine automatische Erkennung der an einer Kreuzung vorhandenen Ampeln notwendig, wobei diese Erkennung auch eine Zuordnung der Ampeln zu den jeweiligen Fahrspuren umfassen muss, für die die Signale der Ampeln zuständig sind. Eine derartige automatische Erkennung von Ampeln an Kreuzungen ist aber nicht nur beim autonomen Fahren einsetzbar, sondern kann auch beim unterstützten oder halbautonomen Fahren eines Kraftfahrzeugs eingesetzt werden, um dem Fahrer beim Führen des Kraftfahrzeugs zu unterstützen.

Eine automatische Erkennung von Ampeln an einer Kreuzung beim automatischen Fahren verfolgt die folgenden Ziele:
- dem Fahrer eine mögliche Geschwindigkeit zur Ampelanlage zu empfehlen,
- automatisch vor der Ampel anzuhalten,
- den Fahrer bei einen versehentlichen Überfahren der Ampel zu warnen, und
- den Fahrer einen Weiterfahrhinweis zu geben, wenn die Ampel wieder grün wird.

Zur Umsetzung dieser Beispiele wird versucht, die Ampel mit der Frontkamera im Fahrzeug zu beobacheten. Dabei muss die folgende Messaufgabe bewältigt werden:
- Die Kamera erkennt die Ampel im Vorfeld und vermisst diese hinsichtlich Position und Ausrichtung.
- Die Kamera erkennt die Spuren und Markierungen auf dem Boden und stellt so einen Zuordnung der Ampel zu den Spuren fest.
- Die Kamera beobachtet fortlaufend den Zustand der relevanten Ampel und gibt diese Information an die entsprechende Funktion weiter.

In der Realität ist allerdings die Zuordnung von Ampel zu Fahrstreifen bedingt durch vielfältige und komplexe Kreuzungssituationen sehr schwierig zu ermitteln, was zu hohen Fehlraten bei der Zuordnung von Ampel zu Fahrstreifen führt.

Die Druckschrift DE 10 2014 205 953 A1 betrifft ein Verfahren zur Analyse einer Verkehrsumfeldsituation eines Fahrzeugs mit einem Navigationssystem und einem Sensorsystem, wobei das Navigationssystem eine Fahrzeugposition ermittelt und das Sensorsystem Bewegungsdaten des Fahrzeugs erfasst sowie ein Bewegungsverhalten des Fahrzeugs in Form von Bewegungstrajektorien des Fahrzeugs ermittelt, wobei die Fahrzeugposition und die Bewegungstrajektorien des Fahrzeugs einen Rückschluss auf das Vorhandensein und/ oder die Art wenigstens eines Merkmals der Umgebung ermöglichen, wobei ein Sensor des Sensorsystems das Merkmal erfasst und wenigstens eine Zusatzinformation über das Merkmal abspeichert.

Die Druckschrift DE 10 2013 220 662 A1 beschreibt ein Verfahren zur Erkennung von Verkehrssituationen beim Betrieb eines Fahrzeugs auf einer mehrere Fahrspuren aufweisenden Straße umfassend folgende Merkmale:
- Mit Hilfe einer fahrzeugseitigen Sensorik werden verschiedene Umgebungsdaten, betreffend einen Status einer Signalanlage, eine Straßenbegrenzung, eine Fahrspurbegrenzung, mindestens eine weitere Markierung auf der Straße optisch erfasst, und
- unter Nutzung der mittels der Sensorik erfassten Umgebungsdaten wird eine Relation zwischen dem Status des Fahrzeugs, welcher zumindest die Angabe der vom Fahrzeug genutzten Fahrspur umfasst, und dem für diesen Fahrzeugstatus gültigen Status der Signalanlage hergestellt.

Die nachveröffentlichte Druckschrift DE 10 2018 004 667 A1 betrifft ein Verfahren zum Bestimmen einer Fahrtrichtungszugehörigkeit einer Lichtzeichenanlage, wobei die Lichtzeichenanlage mittels eines an einem Fahrzeug angebrachten Kamerasystems erfasst wird und erfasste Informationen an eine externe Rechnereinheit gesendet und mittels dieser ausgewertet werden. Dabei ist vorgesehen, dass die durch das Kamerasystem erfassten Informationen der detektierten Lichtzeichenanlage mit in der externen Rechnereinheit hinterlegten Informationen korreliert werden und anhand der Korrelation die Fahrtrichtungszugehörigkeit ermittelt wird.

Die Druckschrift DE 10 2016 217 558 A1 betrifft ein Verfahren zum Zuordnen einer Ampel zu einer Fahrspur, wobei erkannte Phasenfolgen mit erwarteten Phasenfolgen verglichen werden. Die Druckschrift betrifft des Weiteren ein zugehöriges Fahrzeug und ein zugehöriges Speichermedium.

Die Druckschrift US 20140185880 A1 beschreibt ein Verfahren zum Bestimmen der dreidimensionalen Position ein Ampelsignalen, wobei das Verfahren eine Vielzahl von Bildern empfängt und jedes der Bilder mit einer geographischen Position und Richtungsinformation versehen ist. Aus den Bildern werden diejenigen ausgewählt, welche zu dem geographischen Umfeld einer Kreuzung gehören, wobei in jedem ausgewählten Bild rote, gelbe und grüne Objekte identifiziert werden. Anschließend werden in aufeinanderfolgenden Bildern als Funktion der geographischen Position und der Richtungsinformation miteinander assoziierte rote, gelbe und grüne Objekte identifiziert und basierend auf der Identifikation der assoziierten Objekte in den aufeinanderfolgenden Bildern die dreidimensionale Anordnung der Ampelsignale bestimmt werden, die dann anschließend zur weiteren Verwendung gespeichert werden. Weiterhin kann eine einem Ampelsignal zugeordnete Fahrspur ermittelt werden, indem ein Vergleich der dreidimensionalen Anordnung der Ampelsignale mit einer Karte der Fahrspuren durchgeführt wird. Auf diese Weise kann eine dreidimensionale Karte einschließlich der dreidimensionalen Anordnung der Ampelsignale erzeugt und abgespeichert werden.

Die Druckschrift US 20160282879 A1 beschreibt eine computerlesbare Karte zur Verwendung in einem autonomen Fahrzeug. Die detaillierte Karte umfasst eine Vielzahl von Fahrspursegmenten mit einer Vielzahl von Fahrspurverbindungen. Jede der Fahrspurverbindungen kann sich zwischen zwei Fahrspursegmenten über eine Kreuzung erstrecken, wobei jeder Fahrspurverbindung Ampelsignale zugeordnet sein können. Die Karte wird in einem autonomen Fahrzeug verwendet, um Sensorinformation über das Umfeld des autonomen Fahrzeugs basierend auf der Karte zu verarbeiten.

Der Erfindung liegt daher die Aufgabe zugrunde, ein Verfahren zur Zuordnung von Ampeln zu Fahrspuren und eine Verwendung des Verfahrens mit einer verbesserten Zuordnung der Ampeln zu den Fahrstreifen zu schaffen.

Diese Aufgabe wird durch ein Verfahren mit den Merkmalen des Anspruchs 1 sowie durch die Verwendung des Verfahrens mit den Merkmalen des Anspruchs 5 gelöst. Bevorzugte Ausführungsformen sind Gegenstand der Unteransprüche.

Das erfindungsgemäße Verfahren zur Zuordnung von Ampeln einer Ampelanlage eines von dieser Ampelanlage gesteuerten Fahrbahnabschnitts einer Kreuzung zu den Fahrspuren des Fahrbahnabschnitts, wobei der Fahrbahnabschnitt mindestens eine Fahrspur aufweist, die Fahrspuren des Fahrbahnabschnitts eine gemeinsame Fahrtrichtung aufweisen, und eine Vielzahl von einen Schwarm bildenden Fahrzeugen den Fahrbahnabschnitt befahren, wobei jedes Fahrzeug eine Frontkamera aufweist, umfasst die Schritte:
- Erkennen einer vorausliegenden Ampelanlage durch jedes Fahrzeug des Schwarms, welches den Fahrbahnabschnitt befährt und sich auf die Ampelanlage zubewegt mittels der Kamera,
- kontinuierliches Erfassen der Ampelzustände der Ampeln der Ampelanlage und der befahrenen Fahrspur durch die Kamera jedes Fahrzeugs, der Fahrzeuggeschwindigkeit und der Fahrzeugposition durch jedes Fahrzeug, wobei die Erfassung in einer vorbestimmten Entfernung von der Ampelanlage beginnt und bis zum Passieren der Ampelanlage fortgeführt wird,
- Übermitteln dieser von jedem Fahrzeug erfassten Daten Ampelzustände, befahrene Fahrspur, Position und Fahrzeuggeschwindigkeit an einen Backend-Rechner,
- Durchführen folgender Auswertungen der übermittelten Daten durch den Backend-Rechner für jedes Fahrzeug des Schwarms:
   - Ermitteln der erkannten Ampelanlage auf einer Karte,
   - Erkennung der Bewegung des Fahrzeugs durch den Fahrbahnabschnitt,
   - Feststellung der Ampelzustände der Ampeln beim Passieren der Ampelanlage durch das Fahrzeug,
   - Zusammenfassen der Auswertungen der Daten eines jeden Fahrzeugs des Schwarms in einen jeweiligen den Fahrbahnabschnitt betreffenden Datensatzes, wobei der Datensatz den auf rot und grün begrenzten Ampelzustand der Ampeln des Fahrbahnabschnitts, die vom Fahrzeug befahrene Spur des Fahrbahnabschnitts und das Fahrverhalten des Fahrzeugs an den Ampeln, nämlich ob das Fahrzeug durchgefahren oder gehalten hat, umfasst,
      und
   - Erstellen einer von Fahrzeugen abrufbaren Zuordnungstabelle im Backend-Rechner in Form einer Matrix für die erkannte Ampelanlage aus den Datensätzen des Fahrzeugschwarms, wobei die Zuordnungstabelle die Ampeln der Ampelanlage den Fahrspuren des Fahrbahnabschnitts zuordnet,
   - in der Zuordnungstabelle die Ampeln der Ampelanlage mit den Ampelzuständen aufgeführt sind, wobei die Ampelzustände auf rot und grün begrenzt werden, und
   - in der Zuordnungstabelle die Fahrspuren des Fahrbahnabschnitts aufgeführt sind, wobei die Fahrspuren als Funktion der Ampelzustände die binären Werte für Durchfahren und für Halten aufweisen.

Das erfindungsgemäße Verfahren ermittelt daher unter Verwendung von Schwarmdaten einer Vielzahl von Test-Fahrzeugen eine Fahrstreifenzuordnung der Ampeln. Dabei werden das Verhalten der Fahrer und die Beobachtungen der Ampelzustande verglichen, um so für jeden Fahrbahnabschnitt, insbesondere eine Kreuzung, eine richtige Zuordnung der Ampeln zu den Fahrspuren zu ermitteln.

Vorzugsweise beträgt die vorbestimmte Entfernung 500m, ab welcher mit der Erfassung der Ampelzustände der Ampelanlage begonnen wird, wobei die vorbestimmte Entfernung je nach Anwendungsfall weniger betragen kann, beispielsweise wenn mehrere Kreuzungen in kurzer Folge hintereinander angeordnet sind.

Vorzugsweise wird die Zuordnungstabelle pro Ampelanlage in einer Datenbank hinterlegt, wodurch die Zuordnungstabelle für andere Fahrzeuge abrufbar ist.

In der Zuordnungstabelle sind die Ampeln der Ampelanlage mit den Ampelzuständen aufgeführt, wobei die Ampelzustände auf rot und grün begrenzt werden. Durch diese Begrenzung auf die zwei interessierenden Ampelzustände, die anweisen, ob die Ampel passiert werden kann oder angehalten werden muss, können die Ampelzustände in der Zuordnungstabelle durch ein Bit ausgedrückt werden.

Ferner sind In der Zuordnungstabelle die Fahrspuren aufgeführt, wobei die Fahrspuren als Funktion der Ampelzustände die binären Werte für Durchfahren und für Halten aufweisen.

Weiter bevorzugt werden die den Fahrbahnabschnitt befahrenden Fahrzeuge zur Erstellung der Datensätze manuell gesteuert. Der "Schwarm" an Test-Fahrzeugen zur Ermittlung der Zuordnungstabellen wird bevorzugt manuell gesteuert, damit für ein späteres autonomes Fahren für wesentliche Kreuzungen die Zuordnung von Ampeln zu Fahrspuren abgerufen werden kann, um das autonome Fahren sicher zu gestalten.

Bei der erfindungsgemäßen Verwendung des Verfahrens zur Zuordnung von Ampeln einer Ampelanlage eines von dieser Ampelanlage gesteuerten Fahrbahnabschnitts zu den Fahrspuren des Fahrbahnabschnitts nach dem im Vorangegangenen erläuterten Verfahren in einem den Fahrbahnabschnitt befahrenden Fahrzeug, ermittelt das Fahrzeug die Position der für den Fahrbahnabschnitt steuernden Ampelanlage und fordert aufgrund dieser Position die Zuordnungstabelle der betreffenden Ampelanlage aus einer Datenbank an und setzt diese zur Unterstützung des Fahrers in einem Assistenzsystem ein.

Vorzugsweise wird die angeforderte Zuordnungstabelle im Fahrzeug zusammen mit aktuellen Fahrzeugdaten ausgewertet, wobei die aktuellen Fahrzeugdaten insbesondere die aktuelle Spurablage, Blinkereinstellungen und/oder Navigationsrouten betreffen.

Eine bevorzugte Ausführungsform der Erfindung wird nachfolgend anhand der Zeichnungen erläutert. Dabei zeigt
Fig. 1 eine Kreuzungssituation mit entsprechenden Ampelanlagen, und
Fig. 2 eine detaillierte Darstellung einer Ampelsituation für drei Fahrspuren an einer Kreuzung.

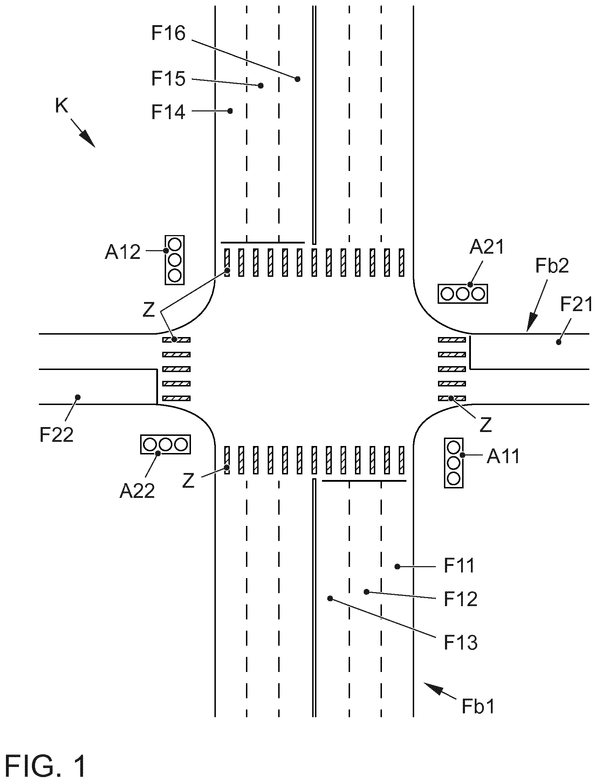

In der Fig. 1 wird eine typische Kreuzungssituation beschrieben, die zur Erläuterung des Verfahrens herangezogen wird. Eine Kreuzung K wird durch das Aufeinandertreffen der beiden Fahrbahnen Fb1 und Fb2 gebildet. Dabei umfasst die erste Fahrbahn Fb1 insgesamt sechs Fahrspuren F11 bis F16, wobei drei Fahrspuren F11 bis F13 in der Fig. 1 nach oben verlaufen und die anderen drei Fahrspuren F14 bis F16 die entgegengesetzte Richtung aufweisen. Die senkrecht zur ersten Fahrbahn Fb1 verlaufende zweite Fahrbahn Fb2 umfasst zwei Fahrspuren F21 und F22, die in entgegengesetzter Richtung verlaufen. Die Verkehrssituation der Kreuzung K mit den beiden Fahrbahnen Fb1 und Fb2 wird durch vier miteinander verbundene Ampelanlagen A11, A12, A21 und A22 geregelt, wobei die Ampelanlage A11 für die Fahrspuren F11 bis F13, die Ampelanlage A12 für die Fahrspuren F14 bis F16, die Ampelanlage A21 für die Fahrspur F21 und die Ampelanlage A22 für die Fahrspur F22 verantwortlich sind. Ferner sind in der Fig. 1 noch der Vollständigkeit halber Fußgängerübergänge in der Form von Zebrastreifen Z eingezeichnet.

Die in der Fig. 1 nur symbolisch eingezeichneten Ampelanlagen A11, A12, A21 und A22 können je nach Kreuzungstyp mehrere Ampeln mit speziellen Bedeutungen umfassen und beispielsweise eine Funktion der Anzahl der Fahrstreifen sein können. So regeln die Ampelanlagen A11 und A12 der Fahrbahn Fb1 mit ihren drei Fahrspuren F11 bis F16 in jede Richtung das Fahrverhalten geradeausfahrend, linksabbiegend und rechtsabbiegend, so dass diese Ampelanlagen A11 und A12 üblicherweise aus mehreren Ampeln bestehen, die für das jeweilige Fahrverhalten zuständig sind. Mit anderen Worten, die genannten Ampelanlagen A11 und A12 umfassen separate Ampeln für die Geradeausfahrt, für das Linksabbiegen und für das Rechtsabbiegen.

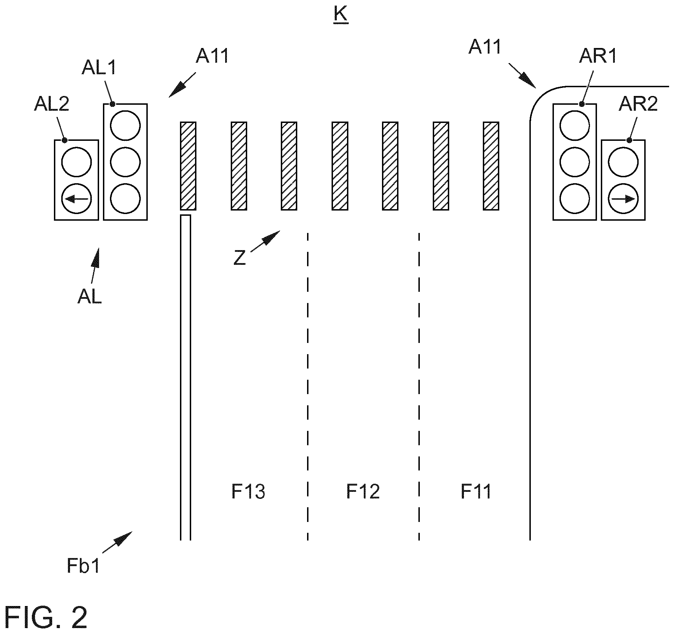

Dies ist in der Fig. 2 dargestellt, die die Verkehrssituation an der Kreuzung K bezüglich der Ampelanlage A11 mit dem Zebrastreifen Z und die von ihr gesteuerten Fahrspuren F11, F12 und F13 im Detail zeigt. Zur Steuerung des Verkehrs auf den genannten Fahrspuren F11, F12 und F13 dienen die rechte Teilampelanlage AR und die linke Teilampelanlage AL der Ampelanlage A11. Dabei regelt die rechte Teilampelanlage AR sowohl den Geradeausverkehr der drei Fahrspuren F11, F12 und F13 mit der Ampel AR1 als auch den Rechtsabbiegerverkehr auf der rechten Fahrspur F11 mit der Ampel AR2. Weiterhin regelt die linke Teilampelanlage AL ebenfalls den Geradeausfahrverkehr auf den drei Fahrspuren F11, F12 und F13 mit der Ampel AL1 als auch den Linksabbiegerverkehr auf der linken Fahrspur F13 mit der Ampel AL2.

Das Verfahren umfasst folgende Schritte:
a) Das Fahrzeug erkennt im Vorfeld eine Ampelanlage sowie den Status der einzelnen Ampeln, d.h. grün, gelb, rot, rot/gelb, und erkennt, auf welchem Fahrstreifen es sich bewegt. Diese Daten werden kontinuierlich aufgezeichnet, bis das Fahrzeug die Ampel durchfahren hat. Außerdem wird die Geschwindigkeit mit aufgezeichnet um zu ermitteln, ob das Fahrzeug vor der Ampel gehalten hat oder ohne Stopp durchfahren konnte. In realen Umgebungen besteht weiter die Möglichkeit, dass der Ampelzustand nicht richtig erkannt wird. Diese kann durch schlechte Sichtbedingungen (Blendungen, Verschmutzungen, etc.), durch Verdeckungen der Ampel (z.B. LkW in der Sichtlinien) oder Ampeln ausserhalb des Sichtbereichs bzw. Öffnungswinkel der Kamera ergeben. In diesen Fällen werden nur die erkannten Ampelzustände gemeldet - fehlende Zustände sind dem Fahrzeug nicht bekannt und können daher nicht kommuniziert werden.
b) Die aufgezeichneten Daten werden an ein Backend System geschickt.
c) Im Backend wird das Folgende durchgeführt:
   i) Referenzierung der erkannten Ampelanlage auf eine Karte
   ii) Erkennung der Bewegung des Fahrzeugs durch die Kreuzung
   iii) Feststellung des Ampelzustand beim Überfahren der Kreuzung

Für die in Fig. 2 dargestellte Ampelanlage A11 werden in der folgenden Tabelle beispielhafte Datensätze angegeben, wie sie an den Backend-Rechner übermittelt werden bzw. im Backend-Rechner zur Bearbeitung vorliegen:

**Tabelle 1:**

| Ampel Rechtsabbiegen AR2 | Ampeln ohne Pfeil AR1 und AL1 | Ampel Linksabbiegen AL2 | Gefahrene Spur | Durchgefahren (1) / Gehalten (0) |
|---|---|---|---|---|
| rot | rot | grün | F13 | 1 |
| rot | 0 | grün | F12 | 0 |
| rot | grün | rot | F11 | 1 |
| rot | grün | rot | F12 | 1 |
| rot | grün | rot | F13 | 1 |

Dabei gilt für das Fahrverhalten an der Ampel:
Durchfahren = "1", Halten = "0".

Die obigen, an den Backend-Rechner übermittelten Datensätze enthalten also die Informationen über die Ampelzustände, die vom Fahrzeug belegte Fahrspur und das Verhalten an der Kreuzung, also ob das Fahrzeug stehen bleibt oder durchfährt. Beispielsweise bedeutet die erste Zeile, dass ein Fahrzeug auf der linken Spur F13 durchgefahren ist, wobei die Ampel AL2 für das Linksabbiegen "grün" war, während alle anderen Ampeln "rot" anzeigten. Daraus lässt sich schließen, dass die Ampel AL2 mit der linken Fahrspur F13 zusammenhängt.
e) Wird davon ausgegangen, dass die Kreuzung nur bei Grün überfahren wird, kann nun eine Zuordnung zu einer möglichen Fahrspur erfolgen. Aus dem Beispiel oben lässt ich entnehmen, dass auf Spur F13 gefahren werden darf, wenn Ampel Links AL2 grün ist. Jedoch nicht auf Spur F12. Informationen zu Spur F11 liegen noch nicht vor. Außerdem kann auf allen Fahrspuren gefahren werden, wenn die Ampel ohne Pfeil AR1, AL1 grün ist.
f) Je nach Ampelsystem ist die Ampeldarstellung mehrdeutig. Beispielsweise ist sowohl die Geradeausfahrt, als auch die Linksabfahrt in der Ampelanlage grün. Das Fahrzeug wählt jedoch nur die Linksabfahrt. Dies führt allerdings nicht zu funktionalen Beeinträchtigungen - da dieses über eine Zuordnungstabelle gelöst wird - welche pro Ampelanlage erfasst werden muss. Die Erfassung erfolgt über mehrere Durchfahrten, welche durch den "Fahrzeugschwarm" aufgenommen werden. Jedes Fahrzeug ermittelt dabei den Zustand in Form einer Boolschen Variable mit den Werten "0" oder "1" für die Spur bei dem entsprechenden Zustand der Ampelanlage.

Mögliche Ampeln, welche nicht von den Fahrzeugen erkannt und somit nicht gemeldet werden, werden hierbei für die Erweiterung der Tabelle nicht berücksichtigt und tragen nichts zum Informationsaufbau bei - aber auch nicht zu Fehlzuständen und können insofern toleriert werden.

Aus den an den Backend übermittelten Daten der "Schwarmflotte", die in Tabelle 1 daargestellt sind, wird eine Zuordnungstabelle in Form einer Matrix für den die Ampelanlage A11 betreffenden Kreuzungsabschnitt aufgestellt und beispielhaft in Tabelle 2 wiedergegeben. Die Zuordnungstabellen für die in Fig. 1 dargestellten weiteren Kreuzugsabschnitte betreffend die Ampelanlagen A12, A21 und A22 sehen entsprechend aus.

**Tabelle 2:**

| Ampel Rechts AR2 | Ampeln ohne Pfeil AR1, AL1 | Ampel Links AL2 | Fahrspur F11 | Fahrspur F12 | Fahrspur F13 |
|---|---|---|---|---|---|
| (1=grün, 0=rot) | (1=grün, 0=rot) | (1=grün, 0=rot) | (1 = Fahren, 0 = Halten) | (1 = Fahren, 0 = Halten) | (1 = Fahren, 0 = Halten) |
| 0 | 0 | 1 | 0 | 0 | 1 |
| 0 | 1 | 0 | 1 | 1 | 1 |
| 0 | 1 | 1 | 1 | 1 | 1 |
| 1 | 0 | 0 | 1 | 0 | 0 |
| 1 | 0 | 1 | 1 | 0 | 1 |
| 1 | 1 | 0 | 1 | 1 | 1 |
| 1 | 1 | 1 | 1 | 1 | 1 |

g) Ist diese Zuordnung ermittelt, wird diese in einer Datenbank in Form einer Zuordnungstabelle pro Ampelanlage hinterlegt und an die Fahrzeuge z.B. als ein Layer der Karte, übertragen.
h) Fährt nun das Auto erneut auf die Ampelanlage zu, so kann anhand der Zuordnungstabelle die möglichen freien Spuren ermittelt werden.
i) Diese Situation wird dann zusammen mit der aktuellen Spurablage, Blinkereinstellungen, Navigationsrouten, etc. durch die Funktionen ausgewertet.

Eine weitere Verbesserung könnte erreicht werden, wenn der Eintrag in der Tabelle direkt im Fahrzeug ermittelt werden kann. Hierbei ist zwar eine erweitere Logik im Fahrzeug erforderlich - allerdings kann auf diese Weise das Datenvolumen deutlich reduziert werden - da hier lediglich der Zustand des Pfads in Relation zu dem Ampelzustand übertragen werden muss.

### Bezugszeichenliste

- K: Kreuzung
- Fb1: Fahrbahn 1 der Fahrbahn 1
- Fb2: Fahrbahn 2 der Fahrbahn 1
- F11: Fahrspur 1 der Fahrbahn 1
- F12: Fahrspur 2 der Fahrbahn 1
- F13: Fahrspur 3 der Fahrbahn 1
- F14: Fahrspur 4 der Fahrbahn 1
- F15: Fahrspur 5 der Fahrbahn 1
- F16: Fahrspur 6 der Fahrbahn 1
- F21: Fahrspur 1 der Fahrbahn 2
- F22: Fahrspur 2 der Fahrbahn 2
- A11: Ampelanlage für Fahrspuren F11 bis F13
- A12: Ampelanlage für Fahrspuren F14 bis F16
- A21: Ampelanlage für Fahrspur F21
- A22: Ampelanlage für Fahrspur F22
- Z: Zebrastreifen
- AR: Teilampelanlage rechts
- AR1: Ampel Geradeausfahrt
- AR2: Ampel Rechtsabbiegen
- AL: Teilampelanlage links
- AL1: Ampel Geradeausfahrt
- AL2: Ampel Linksabbieger

## Patentansprüche

1. Verfahren zur Zuordnung von Ampeln (AR1, AR2, AL1, AL2) einer Ampelanlage (A11) eines von dieser Ampelanlage (A11) gesteuerten Fahrbahnabschnitts (Fb1) einer Kreuzung (K) zu den Fahrspuren (F11, F12, F13) des Fahrbahnabschnitts (Fb1), wobei der Fahrbahnabschnitt (Fb1) mindestens eine Fahrspur (F11, F12, F13) aufweist, die Fahrspuren (F11, F12, F13) des Fahrbahnabschnitts (Fb1) eine gemeinsame Fahrtrichtung aufweisen, und eine Vielzahl von einen Schwarm bildenden Fahrzeugen den Fahrbahnabschnitt (Fb1) befahren, wobei jedes Fahrzeug eine Frontkamera aufweist, mit den Schritten:
- Erkennen einer vorausliegenden Ampelanlage (A11) durch jedes Fahrzeug des Schwarms, welches den Fahrbahnabschnitt (Fb1) befährt und sich auf die Ampelanlage (A11) zubewegt mittels der Kamera,
- kontinuierliches Erfassen der Ampelzustände der Ampeln (AR1, AR2, AL1, AL2) der Ampelanlage (A11) und der befahrenen Fahrspur (F11, F12, F13) durch die Kamera jedes Fahrzeugs, der Fahrzeuggeschwindigkeit und der Fahrzeugposition durch jedes Fahrzeug, wobei die Erfassung in einer vorbestimmten Entfernung von der Ampelanlage (A11) beginnt und bis zum Passieren der Ampelanlage (A11) fortgeführt wird,
- Übermitteln dieser von jedem Fahrzeug erfassten Daten Ampelzustände, befahrene Fahrspur, Position und Fahrzeuggeschwindigkeit an einen Backend-Rechner,
- Durchführen folgender Auswertungen der übermittelten Daten durch den Backend-Rechner für der Fahrzeuge des Schwarms:
- Ermitteln der erkannten Ampelanlage (A11) auf einer Karte,
- Erkennung der Bewegung des Fahrzeugs durch den Fahrbahnabschnitt (Fb1),
- Feststellung der Ampelzustände der Ampeln (AR1, AR2, AL1, AL2) beim Passieren der Ampelanlage (A11) durch das Fahrzeug, Zusammenfassen der Auswertungen der Daten eines jeden Fahrzeugs des Schwarms in einen jeweiligen Datensatz betreffend den Fahrbahnabschnitt, wobei der Datensatz den auf rot und grün begrenzten Ampelzustand der Ampeln (AR1, AR2, AL1, AL2) des Fahrbahnabschnitts, die vom jeweiligen Fahrzeug befahrene Spur des Fahrbahnabschnitts und das Fahrverhalten des Fahrzeugs an den Ampeln (AR1, AR2, AL1, AL2), nämlich ob das Fahrzeug durchgefahren oder gehalten hat, umfasst,
und
- Erstellen einer von Fahrzeugen abrufbaren Zuordnungstabelle im Backend-Rechner in Form einer Matrix für die erkannte Ampelanlage (A11) aus den Datensätzen des Fahrzeugschwarms, wobei die Zuordnungstabelle die Ampeln (AR1, AR2, AL1, AL2) der Ampelanlage (A11) den Fahrspuren (F11, F12, F13) des Fahrbahnabschnitts (Fb1) zuordnet,
- in der Zuordnungstabelle die Ampeln (AR1, AR2, AL1, AL2) der Ampelanlage (A11) mit den Ampelzuständen aufgeführt sind, wobei die Ampelzustände auf rot und grün begrenzt werden, und
- in der Zuordnungstabelle die Fahrspuren (F11, F12, F13) des Fahrbahnabschnitts (Fb1) aufgeführt sind, wobei die Fahrspuren (F11, F12, F13) als Funktion der Ampelzustände die binären Werte für Durchfahren und für Halten aufweisen.

2. Verfahren nach Anspruch 1, wobei die vorbestimmte Entfernung 500m oder weniger beträgt.

3. Verfahren nach Anspruch 1 oder 2, wobei die Zuordnungstabelle pro Ampelanlage (A11) in einer Datenbank hinterlegt wird.

4. Verfahren nach einem der vorangegangenen Ansprüche, wobei die den Fahrbahnabschnitt (Fb1) befahrenden Fahrzeuge zur Erstellung der Datensätze manuell gesteuert werden.

5. Verwendung des Verfahrens zur Zuordnung von Ampeln einer Ampelanlage (A11) eines von dieser Ampelanlage (A11) gesteuerten Fahrbahnabschnitts (Fb1) zu den Fahrspuren (F11, F12, F13) des Fahrbahnabschnitts (Fb1) nach einem der vorangegangenen Ansprüche in einem den Fahrbahnabschnitt (Fb1) befahrenden Fahrzeug, wobei das Fahrzeug die Position der für den Fahrbahnabschnitt (Fb1) steuernden Ampelanlage (A11) ermittelt und aufgrund dieser Position die Zuordnungstabelle der betreffenden Ampelanlage (A11) aus einer Datenbank anfordert und zur Unterstützung des Fahrers in einem Assistenzsystem einsetzt.

6. Verwendung des Verfahrens nach Anspruch 5, wobei die angeforderte Zuordnungstabelle im Fahrzeug zusammen mit aktuellen Fahrzeugdaten ausgewertet wird.

7. Verwendung des Verfahrens nach Anspruch 5 oder 6, wobei die aktuellen Fahrzeugdaten die aktuelle Spurablage, Blinkereinstellungen und/oder Navigationsrouten betreffen.

## Claims

1. Method for allocating traffic lights (AR1, AR2, AL1, AL2) of a traffic light system (A11) of a roadway portion (Fb1) of an intersection (K) that is controlled by this traffic light system (A11) to the lanes (F11, F12, F13) of the roadway portion (Fb1), wherein the roadway portion (Fb1) has at least one lane (F11, F12, F13), the lanes (F11, F12, F13) of the roadway portion (Fb1) have a common direction of travel, and a plurality of vehicles forming a swarm drive on the roadway portion (Fb1), wherein each vehicle has a front camera, the method comprising the following steps:
- each vehicle of the swarm that drives on the roadway portion (Fb1) and moves toward the traffic light system (A11) detecting a traffic light system (A11) ahead by means of the camera,
- the camera of each vehicle continuously recording the traffic light states of the traffic lights (AR1, AR2, AL1, AL2) of the traffic light system (A11) and the lane (F11, F12, F13) being driven on, and each vehicle recording the vehicle speed and the vehicle position, wherein the recording begins at a predetermined distance from the traffic light system (A11) and continues until the traffic light system (A11) is passed,
- transmitting the data recorded by each vehicle, traffic light states, driven lane, position and vehicle speed, to a backend computer,
- carrying out the following evaluations of the transmitted data for the vehicles of the swarm by means of the backend computer:
- identifying the detected traffic light system (A11) on a map,
- detecting the movement of the vehicle through the roadway portion (Fb1),
- determining the traffic light states of the traffic lights (AR1, AR2, **AL1,** AL2) when the vehicle passes the traffic light system (A11), summarizing the evaluations of the data of each vehicle in the swarm into a relevant data set relating to the roadway portion, wherein the data set comprises the traffic light state, limited to red and green, of the traffic lights (AR1, AR2, AL1, AL2) of the roadway portion, the lane on the roadway portion that was driven on by the relevant vehicle, and the driving behavior of the vehicle at the traffic lights (AR1, AR2, AL1, AL2), namely whether the vehicle drove through or stopped,
and
- creating an allocation table in the backend computer, in the form of a matrix for the detected traffic light system (A11), from the data sets of the vehicle swarm, which allocation table can be accessed by vehicles, wherein the allocation table allocates the traffic lights (AR1, AR2, AL1, AL2) of the traffic light system (A11) to the lanes (F11, F12, F13) of the roadway portion (Fb1),
- in the allocation table, the traffic lights (AR1, AR2, AL1, AL2) of the traffic light system (A11) are listed together with the traffic light states, wherein the traffic light states are limited to red and green, and
- in the allocation table, the lanes (F11, F12, F13) of the roadway portion (Fb1) are listed, wherein the lanes (F11, F12, F13) have the binary values for driving through and for stopping as a function of the traffic light states.

2. Method according to claim 1, wherein the predetermined distance is 500 m or less.

3. Method according to claim 1 or claim 2, wherein the allocation table for each traffic light system (A11) is stored in a database.

4. Method according to any of the preceding claims, wherein the vehicles driving on the roadway portion (Fb1) are manually controlled to create the data sets.

5. Use of the method for allocating traffic lights of a traffic light system (A11) of a roadway portion (Fb1) controlled by this traffic light system (A11) to the lanes (F11, F12, F13) of the roadway portion (Fb1) according to any of the preceding claims in a vehicle driving on the roadway portion (Fb1), wherein the vehicle determines the position of the traffic light system (A11) controlling the roadway portion (Fb1) and, based on this position, requests the allocation table of the relevant traffic light system (A11) from a database and uses the allocation table to support the driver in an assistance system.

6. Use of the method according to claim 5, wherein the requested allocation table is evaluated in the vehicle together with current vehicle data.

7. Use of the method according to claim 5 or claim 6, wherein the current vehicle data relate to the current lane deviation, turn signal settings and/or navigation routes.

## Revendications

1. Procédé permettant l'affectation de feux de signalisation (AR1, AR2, AL1, AL2) d'une installation de feux de signalisation (A11) d'un tronçon de chaussée (Fb1) d'un croisement (K) commandé par ladite installation de feux de signalisation (A11) vers des voies de circulation (F11, F12, F13) du tronçon de chaussée (Fb1), dans lequel le tronçon de chaussée (Fb1) présente au moins une voie de circulation (F11, F12, F13), les voies de circulation (F11, F12, F13) du tronçon de chaussée (Fb1) présentent un sens de circulation commun, et une pluralité de véhicules formant un essaim circulent sur le tronçon de chaussée (Fb1), dans lequel chaque véhicule présente une caméra frontale, comportant les étapes consistant à :
- reconnaître une installation de feu de signalisation (A11) précédent par chaque véhicule de l'essaim circulant sur le tronçon de chaussée (Fb1) et se déplaçant vers l'installation de feu de signalisation (A11) au moyen de la caméra,
- détecter en continu, par la caméra de chaque véhicule, des états des feux de signalisation (AR1, AR2, AL1, AL2) de l'installation de feux de signalisation (A11) et de la voie de circulation (F11, F12, F13) empruntée, de la vitesse de véhicule et de la position de véhicule par chaque véhicule, dans lequel la détection commence à une distance prédéfinie de l'installation de feux de signalisation (A11) et se poursuit jusqu'au dépassement de l'installation de feux de signalisation (A11),
- transmettre à un ordinateur dorsal lesdites données détectées par chaque véhicule : état des feux de signalisation, voie de circulation empruntée, position et vitesse de véhicule,
- exécuter les évaluations suivantes des données transmises, par l'ordinateur dorsal, pour les véhicules de l'essaim :
- détermination de l'installation de feux de signalisation (A11) reconnue sur une carte,
- détection du déplacement du véhicule à travers le tronçon de chaussée (Fb1),
- constatation des états des feux de signalisation (AR1, AR2, AL1, AL2) lors du dépassement de l'installation de feux de signalisation (A11) par le véhicule, regroupement des évaluations des données de chaque véhicule de l'essaim en un jeu de données respectif concernant le tronçon de chaussée, dans lequel le jeu de données comprend l'état des feux de signalisation (AR1, AR2, AL1, AL2), limité au rouge et au vert, du tronçon de chaussée, la voie du tronçon de chaussée empruntée par le véhicule respectif et le comportement de conduite du véhicule au niveau des feux de signalisation (AR1, AR2, AL1, AL2), à savoir si le véhicule a traversé ou s'il s'est arrêté,
et
- création d'un tableau d'affectation pouvant être appelé par des véhicules dans l'ordinateur dorsal sous la forme d'une matrice pour l'installation de feux de signalisation (A11) reconnu à partir des jeux de données de l'essaim de véhicules, dans lequel le tableau d'affectation affecte les feux de signalisation (AR1, AR2, AL1, AL2) de l'installation de feux de signalisation (A11) aux voies de circulation (F11, F12, F13) du tronçon de chaussée (Fb1),
- les feux de signalisation (AR1, AR2, AL1, AL2) de l'installation de feux de signalisation (A11) sont représentés avec les états des feux de signalisation dans le tableau d'affectation, dans lequel les états des feux de signalisation sont limités au rouge et au vert, et
- les voies de circulation (F11, F12, F13) du tronçon de chaussée (Fb1) sont représentées dans le tableau d'affectation, dans lequel les voies de circulation (F11, F12, F13) présentent les valeurs binaires pour la traversée et pour l'arrêt en fonction des états des feux de signalisation.

2. Procédé selon la revendication 1, dans lequel la distance prédéfinie est de 500 m ou moins.

3. Procédé selon la revendication 1 ou 2, dans lequel le tableau d'affectation par installation de feux de signalisation (A11) est enregistré dans une base de données.

4. Procédé selon l'une des revendications précédentes, dans lequel les véhicules circulant sur le tronçon de chaussée (Fb1) sont commandés manuellement pour la création des jeux de données.

5. Utilisation du procédé permettant l'affectation de feux de signalisation d'une installation de feux de signalisation (A11) d'un tronçon de chaussée (Fb1) commandé par ladite installation de feux de signalisation (A11) vers les voies de circulation (F11, F12, F13) du tronçon de chaussée (Fb1) selon l'une des revendications précédentes dans un véhicule circulant sur le tronçon de chaussée (Fb1), dans laquelle le véhicule détermine la position de l'installation de feux de signalisation (A11) commandant le tronçon de chaussée (Fb1) et, sur la base de ladite position, demande le tableau d'affectation de l'installation de feux de signalisation (A11) concernée à une base de données et l'utilise pour assister le conducteur dans un système d'aide à la conduite.

6. Utilisation du procédé selon la revendication 5, dans laquelle le tableau d'attribution demandé est évalué dans le véhicule conjointement avec les données de véhicule actuelles.

7. Utilisation du procédé selon la revendication 5 ou 6, dans laquelle les données de véhicule actuelles concernent le départ actuel de la voie, les réglages des clignotants et/ou les itinéraires de navigation.
